# FASCICULE DE BREVET EUROPEEN

(11) **EP 2 307 210 B1**
(45) Date de publication et mention de la délivrance du brevet: **18.01.2012**
(21) Numéro de dépôt: 09780893.5
(22) Date de dépôt: 21.07.2009
(51) Int. Cl.: B60C 23/04, G08C 21/00

(54) **DISPOSITIF DE LOCALISATION DE LA POSITION DROITE ET GAUCHE D'UN ENSEMBLE PNEUMATIQUE ET ROUE D'UN VEHICULE**
VORRICHTUNG ZUR ORTUNG DER RECHTEN UND LINKEN POSITION EINER REIFEN- UND RADANORDNUNG EINES FAHRZEUGES
DEVICE FOR LOCATING THE RIGHT AND LEFT POSITIONS OF THE TYRE AND WHEEL ASSEMBLY OF A VEHICLE

(30) Priorité: 22.07.2008 FR 0855001
(43) Date de publication de la demande: 13.04.2011
(73) Titulaire: Société de Technologie MICHELIN, 63000 Clermont-Ferrand (FR); MICHELIN Recherche et Technique S.A., 1763 Granges-Paccot (CH); TRW Automotive U.S. LLC, Livonia, Michigan 48150 (US)
(72) Inventeur: PENOT, Thierry, F-63000 Clermont-Ferrand (FR); DAUMAS, Franck, F-63830 Nohanent (FR); HUCHARD, Xavier, F-63430 Pont Du Chateau (FR); VILLIEN, Christophe, F-38000 Grenoble (FR)
(74) Mandataire: Dequire, Philippe Jean-Marie Denis
(86) Numéro de dépôt international: PCT/EP2009/059375
(87) Numéro de publication internationale: WO 2010/010095

(56) Documents cités:
- EP-A- 1 669 221
- EP-A- 1 800 913
- FR-A- 2 856 145
- FR-A- 2 888 656

## Description

### Domaine de l'invention

L'invention concerne un dispositif de localisation de la position droite ou gauche d'un ensemble pneumatique-roue sur un véhicule, ainsi que les ensembles pneumatiques et roues équipés de tels dispositifs.

### Arrière-plan technologique

De plus en plus de véhicules automobiles possèdent, à des fins de sécurité, des systèmes de surveillance comportant des capteurs montés sur chacun des ensembles pneumatiques et roues du véhicule, dédiés à la mesure de paramètres, tels que pression ou température des pneumatiques, et destinés à informer le conducteur de toute variation anormale du paramètre mesuré.

Ces systèmes de surveillance comprennent usuellement un capteur placé dans chaque ensemble pneumatique et roue avec un microprocesseur et un émetteur radiofréquence, ainsi qu'une unité centrale de réception des signaux émis par les émetteurs, avec un calculateur intégrant un récepteur radiofréquence connecté à une antenne.

Un des problèmes que nécessitent de résoudre de tels systèmes de surveillance réside dans l'obligation de devoir associer à chaque signal reçu par le récepteur de l'unité centrale, une information concernant la localisation du capteur et donc de l'ensemble pneumatique et roue à l'origine de ce signal, cette obligation perdurant pendant la durée de vie du véhicule, c'est-à-dire devant être respectée même après des changements d'ensembles pneumatiques et roues ou plus simplement des inversions de la position de ces ensembles.

Le document EP 1 669 221 A1 présente un dispositif autonome destiné à être porté par un ensemble pneumatique et roue pour localiser la position droite ou gauche de l'ensemble dans un véhicule comportant :
- deux capteurs magnétiques avec des axes de sensibilité maximale :
- des moyens de mesure d'un signal aux bornes de chacun des capteurs magnétiques, aptes à délivrer deux signaux périodiques déphasés l'un par rapport à l'autre et représentatifs chacun des variations des valeurs du champ magnétique détectées par les capteurs magnétiques pendant un tour de l'ensemble pneumatique et roue ; et
- une unité de calcul programmée pour déterminer, à partir du déphasage entre les deux signaux périodiques, le sens de rotation de l'ensemble pneumatique et roue, et pour déduire de ce sens de rotation et du sens de déplacement du véhicule, la localisation droite ou gauche de l'ensemble pneumatique et roue.

Ce dispositif est tel que les axes de sensibilité maximale des deux capteurs magnétiques sont destinés à être placés dans l'ensemble pneumatique et roue dans un plan sécant par rapport à l'axe de rotation de l'ensemble pneumatique et roue, et décalés l'un par rapport à l'autre, dans ce plan sécant, d'un angle prédéterminé.

Les deux capteurs de ce dispositif détectent le champ magnétique global qui les entoure, composé du champ magnétique terrestre additionné du champ magnétique environnemental véhicule. Ce champ magnétique environnemental véhicule est la résultante d'un ensemble de champs véhicules créés par la présence d'équipements électriques ou magnétiques embarqués dans le véhicule ainsi que par les pièces métalliques proches des passages de roues tels les étriers de freins et les éléments de liaison au sol.

Il existe cependant des points du globe terrestre et des directions de déplacement du véhicule pour lesquelles la contribution du champ magnétique terrestre mesurée par les deux capteurs du dispositif précédent devient négligeable relativement à la contribution du champ magnétique environnemental ce qui peut poser des problèmes d'exploitation des signaux.

### Description de l'invention

L'invention a pour objet un dispositif autonome similaire au dispositif du document EP 1 669 221 A] caractérisé en ce que les deux capteurs magnétiques sont destinés à être disposés sur l'ensemble pneumatique et roue à des azimuts distincts et en ce que le dispositif comprend un élément de filtrage adapté pour éliminer les composantes des deux signaux périodiques de fréquences inférieures et égales à une fréquence donnée.

De préférence, les axes de sensibilité maximale des deux capteurs magnétiques sont destinés à être disposés sur l'ensemble pneumatique et roue à des positions similaires.

Par « similaires », on entend des positions pratiquement superposables par une rotation autour de l'axe de rotation de l'ensemble pneumatique et roue. Les positions des deux axes de sensibilité maximale peuvent cependant ne pas être strictement superposables notamment en raison des dispersions de fabrication des dispositifs et de leur mise en place dans l'ensemble pneumatique et roue. L'ampleur des décalages admis par ce vocabulaire de « similaire » est de quelques degrés d'inclinaison l'un par rapport à l'autre.

Les deux capteurs magnétiques sont destinés à être disposés à des azimuts différents. En conséquence, les signaux issus des deux capteurs vont être liés non seulement à leur rotation dans le champ magnétique terrestre mais aussi au fait qu'ils voient successivement le même champ magnétique local. La contribution due au champ magnétique terrestre est périodique et de fréquence identique à celle de la rotation de l'ensemble pneumatique et roue. En revanche, les signaux provenant des dipôles magnétiques du véhicule (champ local) sont plus localisés ; leurs composantes fréquentielles majeures peuvent ainsi être supérieures à deux fois la fréquence de rotation de l'ensemble pneumatique et roue. En conséquence, l'élément de filtrage introduit dans le dispositif diminue très fortement la contribution aux signaux liée au champ magnétique terrestre ce qui permet une exploitation robuste des signaux liés au champ magnétique environnemental.

Comme précédemment décrit dans EP 1 669 221, les signaux mesurés aux bornes de chaque capteur présentent entre eux un déphasage. Mais les signaux analysés sont principalement liés à la contribution du champ magnétique environnemental du véhicule et non au champ magnétique terrestre et ce déphasage est principalement lié à l'amplitude temporelle du décalage circonférentiel d'azimuts entre les deux capteurs.

L'élément de filtrage peut être un filtre comportant une fréquence de coupure de type passe-haut supérieure à la fréquence de rotation du pneumatique.

Un tel filtre peut être un filtre adaptatif, fonction de la vitesse de rotation de l'ensemble pneumatique et roue.

Le filtre adaptatif peut être rebouclé sur l'amplitude du signal analysé. Ce mode de rebouclage a l'avantage d'être plus aisé à mettre en oeuvre qu'un rebouclage sur la fréquence de rotation de l'ensemble pneumatique et roue.

Selon un mode de réalisation particulièrement simple et économique, l'élément de filtrage comporte une fréquence de coupure de type passe-haut supérieure à la plage de fréquences de fonctionnement visée du dispositif. A titre d'exemple, pour des pneumatiques de tourisme de dimensions usuelles et pour une plage de fonctionnement visée de 20 à 120 km/h, la plage de fréquences de rotation est alors de l'ordre de 3 à 17 Hz et le filtre doit avoir une fréquence de coupure supérieure à 17 Hz.

L'élément de filtrage comprend aussi de façon préférentielle un filtre de type passe-bas de l'ordre de 100 à 200 Hz. Cet filtre passe-bas permet de diminuer le bruit des signaux analysés.

Avantageusement, les deux capteurs magnétiques sont destinés à être placés sur l'ensemble pneumatique et roue à sensiblement la même distance de l'axe de rotation de l'ensemble.

Cela permet aux deux bobines d'être sensibles aux variations de flux du même champ environnemental.

Les deux capteurs magnétiques peuvent avoir leurs deux axes de sensibilité maximale confondus ou être destinés à être placés dans l'ensemble pneumatique et roue avec leurs axes de sensibilité maximale orientés circonférentiellement.

Dans ces deux modes de réalisation très voisins, grâce à la présence de l'élément de filtrage, les signaux après filtrage sont liés principalement aux composantes du champ magnétique environnemental normales à la direction axiale. Ces modes de réalisation peuvent être particulièrement utiles dans certaines configurations de véhicules.

Selon un mode de réalisation préférentiel, les deux capteurs magnétiques sont destinés à être placés dans l'ensemble pneumatique et roue de telle façon que les deux axes de sensibilité maximale sont orientés parallèlement à l'axe de rotation de l'ensemble pneumatique et roue.

Le fait d'orienter les deux axes de sensibilité maximale des deux capteurs magnétiques parallèlement à l'axe de rotation implique que quelle que soit l'orientation du champ magnétique terrestre, ce champ n'a pratiquement aucune influence sur l'amplitude des signaux mesurés aux bornes des deux capteurs magnétiques. L'amplitude des signaux est alors uniquement liée au champ environnemental entourant le dispositif.

Préférentiellement, la distance circonférentielle entre les centres des deux capteurs magnétiques est comprise entre 1 et 8 cm. Une distance inférieure à 1 cm ne permet plus de déterminer avec suffisamment de précision le déphasage entre les deux signaux avec les fréquences d'acquisition usuelles et une distance supérieure à 8 cm rend difficile l'intégration des deux capteurs magnétiques dans un boîtier unique.

La détermination du déphasage temporel entre les deux signaux en sortie des capteurs magnétiques peut être effectuée après amplification et mise en forme des signaux. Préférentiellement, l'unité de calcul est programmée pour déterminer le déphasage, et plus simplement le signe de ce déphasage, entre les deux signaux périodiques par intercorrélation des deux signaux.

L'invention a aussi pour objet un ensemble pneumatique et roue équipé d'un tel dispositif. Le dispositif peut, par exemple, être adapté pour être fixé sur une valve de gonflage ou fixé à la surface de la jante, il est aussi possible de le fixer sur la surface intérieure du pneumatique ou de l'intégrer dans sa structure.

### Brève description des dessins

L'invention sera mieux comprise grâce à la description des dessins selon lesquels :
- la figure 1 représente schématiquement une vue en perspective d'une roue de l'art antérieur, équipée d'un système de capteurs solidaire de la valve de gonflage :
- la figure 2 représente schématiquement une vue en coupe d'un ensemble pneumatique-roue de l'art antérieur équipé d'un système de capteurs solidaire de la valve de gonflage :
- la figure 3 représente schématiquement une vue en perspective d'une valve de gonflage et d'un boîtier solidaire de la valve destiné à accueillir des capteurs ;
- la figure 4 représente schématiquement une vue de dessus d'un véhicule équipé de dispositifs selon l'invention ;
- la figure 5 représente schématiquement une vue de côté d'un ensemble pneumatique-roue équipé d'un dispositif selon l'invention, monté sur le côté droit d'un véhicule :
- la figure 6 représente schématiquement une vue de côté d'un ensemble pneumatique-roue équipé d'un dispositif selon l'invention, monté sur le côté gauche d'un véhicule ;
- la figure 7 représente la composante axiale du champ magnétique ponctuel rémanent mesurée sur un essieu arrière de véhicule :
- la figure 8 représente les signaux obtenus sur un véhicule dont les pneumatiques sont équipés d'un dispositif selon l'invention, avant traitement numérique ;
- la figure 9 présente un schéma fonctionnel d'un dispositif selon l'invention ; et
- la figure 10 présente un schéma fonctionnel d'un second dispositif selon l'invention.

Ces figures illustrent le mode de réalisation d'un dispositif dans lequel les capteurs magnétiques ont leurs directions de sensibilité maximale orientées axialement, mais s'appliquent aussi aux autres modes de réalisation revendiqués. Elles sont données dans un but purement illustratif et n'ont aucun caractère limitatif.

### Description détaillée de modes de réalisation

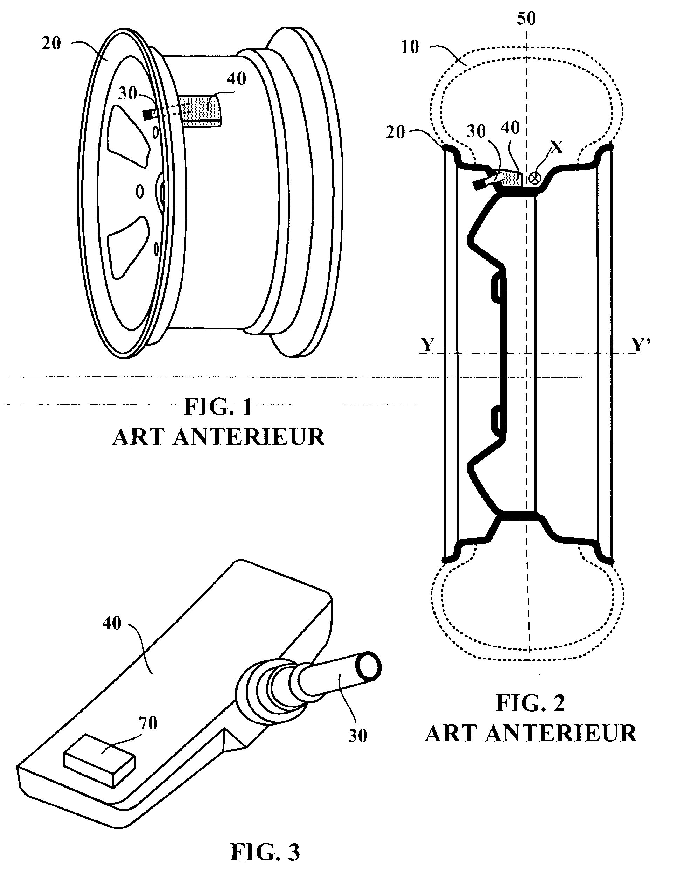

La figure 1 représente une vue en perspective d'une roue 20 de l'art antérieur, équipée d'une valve de gonflage 30 et d'un boîtier 40 prévu pour recevoir des capteurs. Dans un souci de clarté, le pneumatique 10 n'est pas représenté.

La figure 2 représente une vue en coupe d'un autre ensemble pneumatique-roue de l'art antérieur, formé par un pneumatique 10 et une roue 20 et équipé d'une valve de gonflage 30 et d'un boîtier 40 prévu pour recevoir des capteurs. La trace du plan médian 50 du pneumatique, celle de la direction circonférentielle ou tangentielle X au niveau du boîtier 40 ainsi que celle de l'axe de rotation YY' de l'ensemble pneumatique roue sont également représentées.

La figure 3 représente schématiquement une vue en perspective d'une valve de gonflage 30 et d'un boîtier 40 solidaire de la valve et destiné à accueillir des capteurs ; un tel boîtier est connu, par exemple, de EP 1 106 397. Il peut être adapté pour recevoir un dispositif 70 selon l'invention.

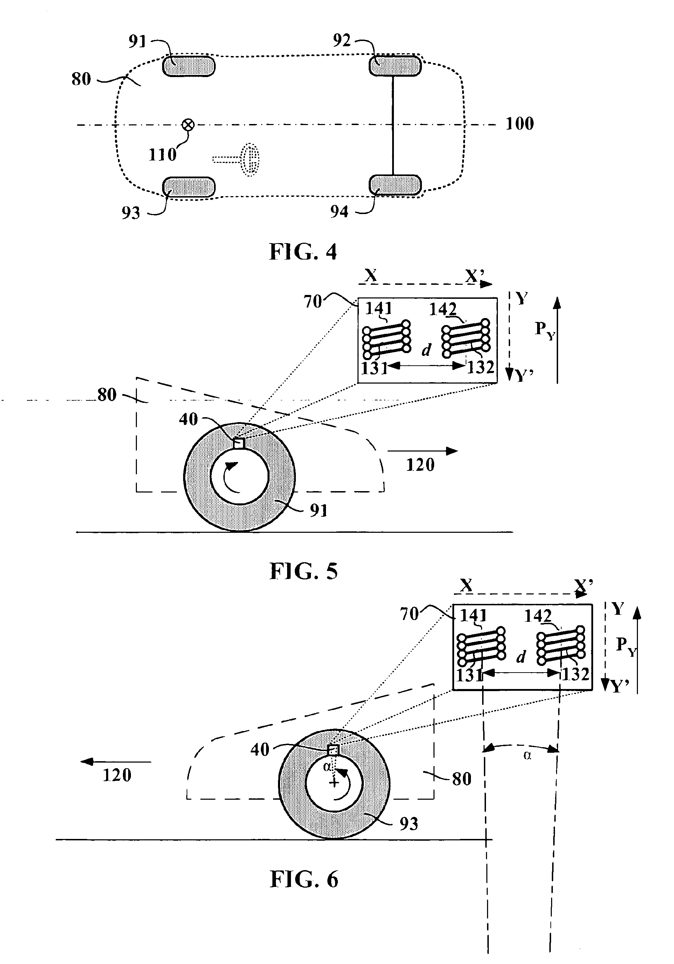

La figure 4 représente schématiquement une vue de dessus d'un véhicule 80 dont les ensembles pneumatique-roue 91 à 94 sont équipés de dispositifs selon l'invention comportant deux capteurs magnétiques sensibles au champ magnétique environnemental véhicule, les deux capteurs magnétiques étant disposés de manière à ce que leurs axes soient parallèles, voire confondus.

Le transfert d'un ensemble pneumatique-roue du côté gauche au côté droit du véhicule en gardant le même côté de l'ensemble à l'extérieur par rapport au véhicule, s'analyse comme une rotation, éventuellement suivie d'une translation. Ainsi, si l'on remplace l'ensemble 91 ou l'ensemble 92 par l'ensemble 93, ce dernier est tourné de 180° autour d'un axe 110 perpendiculaire au sol (pour atteindre la position de l'ensemble 91) puis décalé en translation (si la position 92 est visée). La disposition particulière des capteurs magnétiques a pour conséquence de réduire la symétrie rotatoire du dispositif, de sorte que la configuration relative des capteurs magnétiques est différente d'un côté du véhicule à l'autre. Même la rotation de l'ensemble d'obtenir la même configuration relative des capteurs magnétiques sur les deux côtés du véhicule. Cette configuration relative est donc caractéristique de chaque côté du véhicule.

Ce constat fondamental est illustré aux figures 5 et 6 qui représentent des vues de côté d'ensembles pneumatique-roue équipés d'un dispositif 70 selon l'invention, monté sur le côté droit (figure 5) et gauche (figure 6) du véhicule.

La figure 5 représente un ensemble pneumatique-roue 91 monté sur la position avant du côté droit du véhicule 80 qui avance dans la direction 120, indiquée par une flèche. Un dispositif 70 selon l'invention est monté dans un boîtier 40 et fixé sur l'ensemble 91. Le dispositif comporte deux capteurs magnétiques 131 et 132 sensibles au champ magnétique environnemental véhicule *P*. Chaque capteur magnétique comporte une bobine avec un noyau en fer doux. Les deux bobines 131 et 132 sont disposées avec leurs deux axes, respectivement 141 et 142, orientés parallèlement à l'axe de rotation de l'ensemble pneumatique et roue YY'. Les deux bobines sont ainsi sensibles pratiquement uniquement à la composante selon YY' ou composante axiale du champ magnétique environnemental véhicule *P_{Y}*. Les deux axes 141 et 142 sont aussi décalés circonférentiellement, c'est-à-dire dans la direction XX', d'une distance *d*. Le décalage en azimut α correspondant est illustré à la figure 6.

La figure 6 représente un ensemble pneumatique-roue 93 monté sur la position avant du côté gauche du véhicule 80 qui avance dans la direction 120. Le même dispositif selon l'invention est monté dans un boîtier 40 et fixé de la même façon sur l'ensemble 93.

La comparaison des figures 5 et 6 permet de comprendre le fonctionnement du dispositif d'autolocalisation. Lorsque l'ensemble pourvu du dispositif 70 est monté sur le côté droit du véhicule (cas de la figure 5) et lorsque le véhicule avance, la bobine 132 est toujours en avance de phase sur la bobine 131 : il faut que l'ensemble pneumatique-roue effectue une rotation d'un certain angle autour de son axe de rotation pour que la bobine 131 se trouve dans la même position par rapport au champ magnétique environnemental véhicule que la bobine 132 initialement. La situation est inversée pour un ensemble pourvu du dispositif monté sur le côté gauche du véhicule (cas de la figure 6) : ici, c'est la bobine 131 qui est en avance de phase sur la bobine 132. Il suffit donc de déterminer le déphasage relatif des signaux mesurés par les deux bobines pour connaître, pour une direction de mouvement donnée (avant ou arrière) du véhicule, le côté du véhicule sur lequel se trouvent les bobines et ainsi les ensembles pneumatiques et roues correspondant.

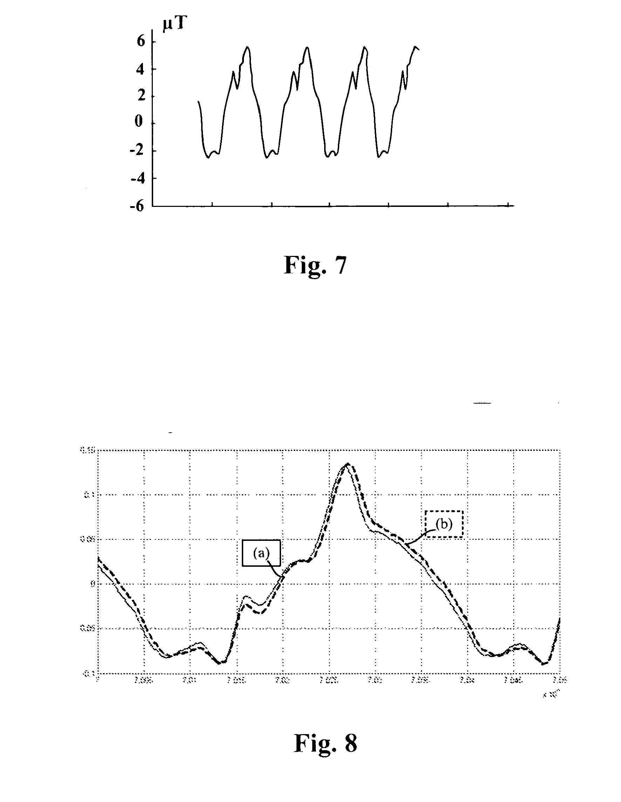

La figure 7 représente la composante orienté selon l'axe YY' du champ magnétique environnemental véhicule mesuré avec un magnétomètre fixé sur la jante d'une roue. Cette courbe est mesurée dans le cas d'un essieu arrière d'un véhicule de marque BMW 323i.

Le magnétomètre est fixé à la jante de la roue dans une position très proche de celle d'un dispositif fixé à la valve de cette roue. On voit que le champ environnemental véhicule pour l'essieu arrière de ce véhicule particulier et apprécié au niveau d'un boîtier fixé à une valve de gonflage a une amplitude crête-crête de l'ordre de 9 µT.

Chaque bobine est un capteur magnétique passif qui produit un signal proportionnel à la variation du flux magnétique qui la traverse selon la loi de Faraday-Lenz. Le signal généré par chaque bobine est d'autant plus ample que les variations de flux magnétique traversant la bobine sont plus fortes et plus rapides : son amplitude dépend donc aussi de la vitesse de rotation de la bobine. Dans un mode de réalisation particulier on intègre la valeur du signal pour retrouver la valeur du champ et s'affranchir de l'effet vitesse.

La figure 8 représente les signaux mesurés aux bornes des deux bobines 131 et 132 en fonction de l'angle de rotation de l'ensemble pneumatique-roue (en degrés). Chaque bobine produit un signal périodique dont la périodicité est celle de la rotation de l'ensemble pneumatique-roue ; la fréquence dépend donc de la vitesse du véhicule. Les valeurs extrêmes sont atteintes lorsque le champ magnétique environnemental véhicule est aligné avec l'axe de la bobine correspondante. L'amplitude du signal est indépendante du positionnement terrestre du véhicule. Le déphasage est lié à l'angle alpha (α), correspondant à l'angle que forment les deux centres des bobines par rapport à l'axe de rotation. A titre d'exemple, un décalage de 2 cm par rapport à une circonférence de 100 cm représente un angle de 2 / 100 * 360° = 7,2°.

Les courbes 8(a) et 8(b) montrent les signaux mesurés aux bornes des bobines 131 et 132 d'un dispositif 70 placé sur un ensemble pneumatique-roue dans des conditions telles que représentées à la figure 6 : le signal correspondant à la bobine 132 est en retard de phase par rapport à celui correspondant à la bobine 131. La situation serait inversée dans le cas de la situation présentée à la figure 5 où le signal de la bobine 132 serait en avance de phase par rapport au signal de la bobine 131. Pour un sens de mouvement donné, il est donc possible de déterminer le côté sur lequel se trouve l'ensemble pneumatique-roue à partir du déphasage relatif des signaux mesurés par les deux bobines (ou, en d'autres termes, à partir du signe du déphasage des signaux).

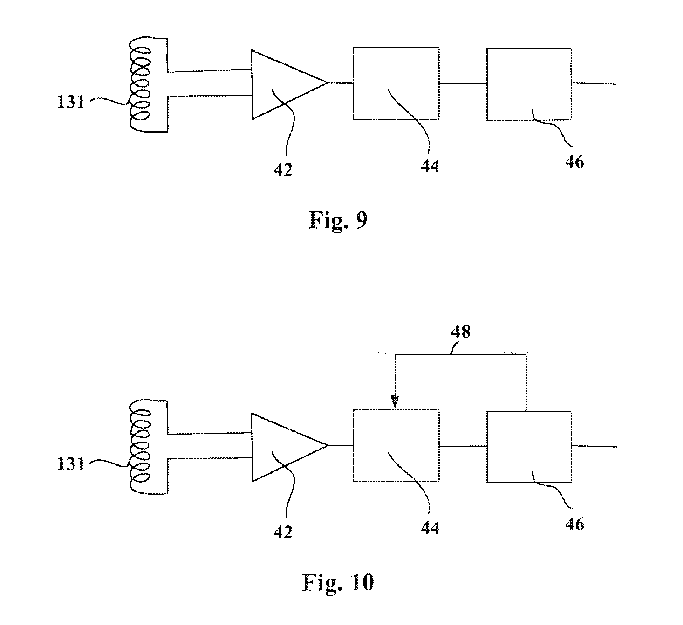

La figure 9 présente un premier schéma fonctionnel du dispositif 70. Pour la mesure et le traitement de la différence de potentiel aux bornes de chaque bobine 131, 132, le dispositif comprend un module d'amplification 42 et un module de mise en forme 44 incluant un filtre comportant une fréquence de coupure de type passe-haut égale à 19 Hz et un comparateur. Le dispositif comprend en plus une unité de calcul 46 vers laquelle est dirigée le signal mis en forme pour déterminer à partir de l'analyse du signe du déphasage entre les deux signaux le sens de rotation de la roue et déduire de ce sens de rotation et du sens de déplacement du véhicule, déterminé par ailleurs par tout procédé connu en soi, la position droite ou gauche de l'ensemble pneumatique et roue correspondant.

De façon préférentielle, l'unité de calcul du dispositif selon l'invention détermine le signe du déphasage entre les deux signaux issus des deux bobines par intercorrélation de ces deux signaux. L'avantage de cette méthode est qu'elle est insensible à la forme des signaux mesurés et qu'elle permet d'accumuler de l'information sur une période suffisamment longue afin d'améliorer le rapport signal à bruit du critère de décision et conduire ainsi à une réponse sans équivoque. Cette méthode a aussi l'avantage de s'adapter à des capteurs de sensibilités différentes.

Ce dispositif est adapté pour des pneumatiques de tourisme de dimensions usuelles à une plage de fonctionnement comprise entre 20 et 120 km/h. Pour ces pneumatiques, la plage de fréquences de fonctionnement correspondante est de 3 à 17 Hz. La fréquence de coupure de l'ordre de 19 Hz, avec un filtre adapté aux conditions du véhicule permet de supprimer efficacement l'influence des signaux de fréquence égale à la fréquence de rotation et ainsi l'influence parasite du champ magnétique terrestre.

La figure 10 présente une variante du dispositif 70. Dans cette variante, le module de mise en forme 44 comprend un filtre adaptatif comportant une fréquence de coupure de type passe-haut variable en fonction de la vitesse de rotation de l'ensemble pneumatique et roue. Une boucle 48 relie l'unité de calcul 46 au module de mise en forme des signaux 44 pour indiquer la prise en compte par le filtre adaptatif de la vitesse déterminée par l'unité de mesure. De façon préférentielle, le module de mise en forme est rebouclé sur l'amplitude du signal, cette amplitude est directement fonction de la vitesse. Il est donc très aisé de déterminer la vitesse de rotation à partir de l'amplitude mesurée.

L'information est transmise par radio à une unité centrale embarquée dans le véhicule.

Bien entendu, le principe de l'invention ne peut être exploité de façon fiable dans une méthode pour la détermination de l'emplacement d'un ensemble pneumatique-roue que si le dispositif selon l'invention est fixé sur le même côté de l'ensemble pneumatique-roue par rapport au véhicule pour tous les ensembles 91 à 94 dont le positionnement doit être déterminé. Il importe peu que ce soit toujours le côté extérieur ou toujours le côté intérieur par rapport au véhicule, pourvu que ce soit systématiquement le même côté. La fixation du dispositif sur une valve de gonflage constitue une façon particulièrement simple d'assurer que tous les dispositifs se trouvent sur le côté extérieur par rapport au véhicule.

Il ressort de la description de l'invention que la direction du mouvement est un paramètre important pour identifier l'emplacement des ensembles pneumatique-roue : une inversion de la direction entraîne une inversion du déphasage des signaux des deux bobines 131 et 132. La détermination de la direction du mouvement peut se faire à l'aide d'un dispositif connu (comme par exemple, le dispositif à billes de EP 0 760 299), à l'aide de signaux existants dans le véhicule (alimentation des feux de recul) ou encore à partir de la vitesse du véhicule (qui peut être déterminée à partir de la fréquence du signaux mesurées par chacune des deux bobines 131 et 132) : en désactivant la détermination de l'emplacement lorsque la vitesse est inférieure à une certaine limite (par exemple, 30 km/h), on est certain que le véhicule avance lorsque la détermination est effectuée.

La méthode décrite dans ce document ne permet que la détermination du côté du véhicule sur lequel se trouve un ensemble pneumatique-roue. Si la position précise (avant ou arrière du véhicule) doit être déterminée, la méthode doit être complétée par l'une quelconque des méthodes connues permettant de discriminer entre les positions avant et arrière.

L'invention n'est pas limitée aux exemples décrits et représentés et diverses modifications peuvent y être apportées sans sortir de son cadre défini par les revendications annexées.

## Revendications

1. Dispositif autonome destiné à être porté par un ensemble pneumatique et roue pour localiser la position droite ou gauche dudit ensemble dans un véhicule comportant :
- deux capteurs magnétiques avec des axes de sensibilité maximale ;
- des moyens de mesure d'un signal aux bornes de chacun des capteurs magnétiques, aptes à délivrer deux signaux périodiques déphasés l'un par rapport à l'autre et représentatifs chacun des variations des valeurs du champ magnétique détectées par lesdits capteurs magnétiques pendant un tour de l'ensemble pneumatique et roue : et
- une unité de calcul programmée pour déterminer, à partir du déphasage entre les deux signaux périodiques, le sens de rotation de l'ensemble pneumatique et roue, et pour déduire de ce sens de rotation et du sens de déplacement du véhicule, la localisation droite ou gauche de l'ensemble pneumatique et roue ;
**caractérisé en ce que** les deux capteurs magnétiques sont destinés à être disposés sur l'ensemble pneumatique et roue à des azimuts distincts et **en ce que** le dispositif comprend un élément de filtrage adapté pour éliminer les composantes desdits deux signaux périodiques de fréquences inférieures et égales à une fréquence donnée.

2. Dispositif selon la revendication 1, dans lequel les axes de sensibilité maximale des deux capteurs magnétiques sont destinés à être disposés dans l'ensemble pneumatique et roue dans des positions similaires.

3. Dispositif selon l'une quelconque des revendications précédentes, dans lequel l'élément de filtrage est un filtre comportant une fréquence de coupure de type passe-haut supérieure à la fréquence de rotation du pneumatique.

4. Dispositif selon la revendication 3, dans lequel l'élément de filtrage est un filtre adaptatif fonction de la vitesse de rotation de l'ensemble pneumatique et roue.

5. Dispositif selon la revendication 4, dans lequel le filtre adaptatif est rebouclé sur l'amplitude du signal analysé.

6. Dispositif selon l'une quelconque des revendications 1 et 2, dans lequel l'élément de filtrage est un filtre comportant une fréquence de coupure de type passe-haut supérieure à la plage de fréquences de fonctionnement visée du dispositif.

7. Dispositif selon la revendication 6, dans lequel la fréquence de coupure dudit filtre est supérieure à 17 Hz.

8. Dispositif selon l'une quelconque des revendications précédentes, dans lequel l'élément de filtrage comporte une fréquence de coupure de type passe-bas de l'ordre de 100 à 200 Hz.

9. Dispositif selon l'une quelconque des revendications précédentes, dans lequel les deux capteurs magnétiques sont destinés à être placés sur ledit ensemble pneumatique et roue à sensiblement la même distance de l'axe de rotation dudit ensemble.

10. Dispositif selon l'une quelconque des revendications précédentes, dans lequel les deux capteurs magnétiques ont les deux axes de sensibilité maximale sensiblement confondus.

11. Dispositif selon l'une quelconque des revendications 1 à 9, dans lequel les deux capteurs magnétiques sont destinés à être placés sur ledit ensemble pneumatique et roue avec leurs axes de sensibilité maximale sensiblement orientés circonférentiellement.

12. Dispositif selon l'une quelconque des revendications 1 à 9, dans lequel les deux capteurs magnétiques sont destinés à être placés sur ledit ensemble pneumatique et roue de telle façon que les deux axes de sensibilité maximale sont orientés sensiblement parallèlement à l'axe de rotation de l'ensemble pneumatique et roue.

13. Dispositif selon l'une quelconque des revendications précédentes, dans lequel la distance circonférentielle entre les centres des deux capteurs magnétiques est comprise entre 1 et 8 cm.

14. Dispositif selon l'une quelconque des revendications précédentes, dans lequel l'unité de calcul est programmée pour déterminer le signe du déphasage entre les deux signaux périodiques par intercorrélation desdits deux signaux.

15. Dispositif selon l'une quelconque des revendications précédentes, tel qu'il est destiné à être fixé sur une valve de gonflage de l'ensemble pneumatique et roue.

16. Pneumatique **caractérisé en ce qu'**il est muni d'un dispositif selon l'une des revendications 1 à 14.

17. Roue **caractérisée en ce qu'**elle est équipée d'un dispositif selon l'une quelconque des revendications 1 à 14.

## Claims

1. Self-contained device intended to be carried by a wheel-tire assembly in order to locate whether the said assembly is positioned on the right or on the left of a vehicle, and comprising:
- two magnetic sensors with axes of maximum sensitivity;
- means of measuring a signal at the terminals of each of the magnetic sensors, these means being capable of delivering two periodic signals which are phase shifted relative to one another and each representative of the variations in the magnitudes of the magnetic field as detected by the said magnetic sensors during a revolution of the wheel-tire assembly; and
- a processing unit programmed to determine, from the phase shift between the two periodic signals, the direction in which the wheel-tire assembly is rotating and to deduce, from this direction of rotation and from the direction of travel of the vehicle, whether the wheel-tire assembly is located on the right or on the left;
**characterized in that** the two magnetic sensors are intended to be positioned on the wheel-tire assembly at distinct azimuthal locations, and **in that** the device comprises a filtering element designed to eliminate those components of the said two periodic signals the frequencies of which are below and equal to a given frequency.

2. Device according to Claim 1, in which the axes of maximum sensitivity of the two magnetic sensors are intended to be positioned in the wheel-tire assembly at similar positions.

3. Device according to either one of the preceding claims, in which the filtering element is a filter that has a cut-off frequency of the high-pass type higher than the rotational frequency of the tire.

4. Device according to Claim 3, in which the filtering element is an adaptive filter dependent on the rotational speed of the wheel-tire assembly.

5. Device according to Claim 4, in which the adaptive filter is looped back onto the amplitude of the analyzed signal.

6. Device according to either one of Claims 1 and 2, in which the filtering element is a filter comprising a cut-off frequency of the high-pass type higher than the intended range of operating frequencies of the device.

7. Device according to Claim 6, in which the cut-off frequency of the said filter is higher than 17 Hz.

8. Device according to any one of the preceding claims, in which the filtering element comprises a cut-off frequency of the low-pass type of the order of 100 to 200 Hz.

9. Device according to any one of the preceding claims, in which the two magnetic sensors are intended to be positioned on the said wheel-tire assembly at substantially the same distance from the axis of rotation of the said assembly.

10. Device according to any one of the preceding claims, in which the two magnetic sensors have the two axes of maximum sensitivity more or less coincident.

11. Device according to any one of Claims 1 to 9, in which the two magnetic sensors are intended to be positioned on the said wheel-tire assembly with their axes of maximum sensitivity directed more or less circumferentially.

12. Device according to any one of Claims 1 to 9, in which the two magnetic sensors are intended to be positioned on the said wheel-tire assembly in such a way that the two axes of maximum sensitivity are directed more or less parallel to the axis of rotation of the wheel-tire assembly.

13. Device according to any one of the preceding claims, in which the circumferential distance between the centers of the two magnetic sensors is between 1 and 8 cm.

14. Device according to any one of the preceding claims, in which the processing unit is programmed to determine the sign of the phase shift between the two periodic signals by cross-correlating the said two signals.

15. Device according to any one of the preceding claims as intended to be attached to an inflation valve of the wheel-tire assembly.

16. Tire, **characterized in that** it is fitted with a device according to one of Claims 1 to 14.

17. Wheel, **characterized in that** it is equipped with a device according to any one of Claims 1 to 14.

## Patentansprüche

1. Autonome Vorrichtung, die dazu bestimmt ist, von einer Einheit aus Luftreifen und Rad getragen zu werden, um die rechte oder linke Position der Einheit in einem Fahrzeug zu lokalisieren, die aufweist:
- zwei Magnetsensoren mit Achsen maximaler Empfindlichkeit;
- Messeinrichtungen eines Signals an den Klemmen jedes der Magnetsensoren, die zwei periodische Signale liefern können, welche zueinander phasenverschoben und je für die Veränderungen der Werte des Magnetfelds repräsentativ sind, die von den Magnetsensoren während einer Umdrehung der Einheit aus Luftreifen und Rad erfasst wurden; und
- eine Recheneinheit, die programmiert ist, um ausgehend von der Phasenverschiebung zwischen den zwei periodischen Signalen die Drehrichtung der Einheit aus Luftreifen und Rad zu bestimmen und aus dieser Drehrichtung und der Bewegungsrichtung des Fahrzeugs die rechte oder linke Lokalisierung der Einheit aus Luftreifen und Rad abzuleiten,
**dadurch gekennzeichnet, dass** die zwei Magnetsensoren dazu bestimmt sind, auf der Einheit aus Luftreifen und Rad an unterschiedlichen Azimuten angeordnet zu werden, und dass die Vorrichtung ein Filterelement enthält, das geeignet ist, um die Komponenten der zwei periodischen Signale von Frequenzen niedriger als und gleich einer gegebenen Frequenz zu entfernen.

2. Vorrichtung nach Anspruch 1, bei der die Achsen maximaler Empfindlichkeit der zwei Magnetsensoren dazu bestimmt sind, in der Einheit aus Luftreifen und Rad in ähnlichen Positionen angebracht zu werden.

3. Vorrichtung nach einem der vorhergehenden Ansprüche, bei der das Filterelement ein Filter ist, das eine Grenzfrequenz von der Art Hochpass höher als die Drehfrequenz des Luftreifens aufweist.

4. Vorrichtung nach Anspruch 3, bei der das Filterelement ein adaptives Filter ist, das von der Drehgeschwindigkeit der Einheit aus Luftreifen und Rad abhängt.

5. Vorrichtung nach Anspruch 4, bei der das adaptive Filter auf die Amplitude des analysierten Signals rückgeschleift wird.

6. Vorrichtung nach einem der Ansprüche 1 und 2, bei der das Filterelement ein Filter ist, das eine Grenzfrequenz von der Art Hochpass höher als der beabsichtigte Betriebsfrequenzbereich der Vorrichtung aufweist.

7. Vorrichtung nach Anspruch 6, bei der die Grenzfrequenz des Filters höher als 17 Hz ist.

8. Vorrichtung nach einem der vorhergehenden Ansprüche, bei der das Filterelement eine Grenzfrequenz von der Art Tiefpass in der Größenordnung von 100 bis 200 Hz aufweist.

9. Vorrichtung nach einem der vorhergehenden Ansprüche, bei der die zwei Magnetsensoren dazu bestimmt sind, auf der Einheit aus Luftreifen und Rad im Wesentlichen in gleichem Abstand zur Drehachse der Einheit angeordnet zu werden.

10. Vorrichtung nach einem der vorhergehenden Ansprüche, bei der die zwei Achsen maximaler Empfindlichkeit der zwei Magnetsensoren im Wesentlichen zusammenfallen.

11. Vorrichtung nach einem der Ansprüche 1 bis 9, bei der die zwei Magnetsensoren dazu bestimmt sind, auf der Einheit aus Luftreifen und Rad mit ihren Achsen maximaler Empfindlichkeit im Wesentlichen in Umfangsrichtung ausgerichtet angeordnet zu werden.

12. Vorrichtung nach einem der Ansprüche 1 bis 9, bei der die zwei Magnetsensoren dazu bestimmt sind, auf der Einheit aus Luftreifen und Rad so angeordnet zu werden, dass die zwei Achsen maximaler Empfindlichkeit im Wesentlichen parallel zur Drehachse der Einheit aus Luftreifen und Rad ausgerichtet sind.

13. Vorrichtung nach einem der vorhergehenden Ansprüche, bei der der Umfangsabstand zwischen den Zentren der zwei Magnetsensoren zwischen 1 und 8 cm liegt.

14. Vorrichtung nach einem der vorhergehenden Ansprüche, bei der die Recheneinheit programmiert ist, um das Vorzeichen der Phasenverschiebung zwischen den zwei periodischen Signalen durch Interkorrelation der zwei Signale zu bestimmen.

15. Vorrichtung nach einem der vorhergehenden Ansprüche, derart, dass sie dazu bestimmt ist, auf einem Füllventil der Einheit aus Luftreifen und Rad befestigt zu werden.

16. Luftreifen, **dadurch gekennzeichnet, dass** er mit einer Vorrichtung nach einem der Ansprüche 1 bis 14 versehen ist.

17. Rad, **dadurch gekennzeichnet, dass** es mit einer Vorrichtung nach einem der Ansprüche 1 bis 14 ausgestattet ist.
